# EUROPEAN PATENT SPECIFICATION

(11) **EP 2 657 060 B1**
(45) Date of publication and mention of the grant of the patent: **23.11.2016**
(21) Application number: 12165376.0
(22) Date of filing: 24.04.2012
(51) Int. Cl.: B60L 7/00, B60T 13/74

(54) **An electric braking system**
Elektrisches Bremssystem
Système de freinage électrique

(43) Date of publication of application: 30.10.2013
(73) Proprietor: Bombardier Transportation GmbH, 10785 Berlin (DE)
(72) Inventor: Berglund, Jan, SE-722 44 Västerås (SE)
(74) Representative: Olsson, Jan

(56) References cited:
- DE-A1-102006 051 317

## Description

### TECHNICAL FIELD OF THE INVENTION AND BACKGROUND ART

The present invention relates to an electric braking system for an electric track-bound vehicle according to the preamble of appended claim 1.

The reason for having two braking devices in such an electric braking system is that it has to be ensured that braking of the electric track-bound vehicle may always be accomplished, so that one of said braking devices is in fact to be considered as redundant. Said first electric braking device will normally be the braking device used for service braking of the electric track-bound vehicle, in which braking therethrough is normally obtained by controlling current valves associated with said converter to conduct a current from the electric machine then operating as a generator mainly through rectifying diodes of the converter and into at least one said first dissipative resistor or into an electric power supply line to which the vehicle is connected.

The second braking device is normally there for obtaining braking, i.e. ensure reliable braking of the vehicle would the first electric braking device for any reason not be able to take care thereof. A mechanical braking device has for that sake mostly been chosen for said second braking device, in which the mechanical braking device has supervised the electric braking device and added mechanical brake torque to the brake torque generated by the first electric braking device would that torque be too low or disappear totally. The use of such a mechanical braking device as said second braking device means that the mechanical brake of such an electric track-bound vehicle has to be sized accordingly resulting in considerable cost, in particular lifetime cost thereof, especially due to the maintenance required for such brakes and the considerable mass thereof resulting in a noticeable extra energy consumption, not to speak about pollution by particles from brake pads of such mechanical brakes.

When we here speak about first electric braking device we do not consider the option to use the PWM control of the converter connected to said electric machine to brake the vehicle. This option may be and is normally chosen when there is a possibility to feed energy from said machine back to a supplying network. When this possibility exists this PWM control may alone take care of the entire electric braking. However, this possibility does not exist if no other consumer is connected to said network or the vehicle is within a dead section of the network. The PWM control may in such a case be combined with the control of the electric braking system according to the invention. It is then important to measure the direct voltage of the direct voltage side of said converter so as to control electric braking devices of the system to keep this direct voltage at a level not destroying semiconductor devices of said converter.

An electric braking system according to the introduction is known through DE 10 2006 051317 A1.

### SUMMARY OF THE INVENTION

The object of the present invention is to provide an electric braking system of the type defined in the introduction being improved in at least some aspect with respect to such braking systems already known.

This object is according to the invention obtained by providing a system which is further characterized in that the system further comprises means configured to provide both said control units with a same reference signal of a total braking current to be led from electric terminals of the electric machine to said dissipative resistors of the two devices, that said control units are configured, upon receipt of a said total braking current reference signal, to control said two arrangements to operate in parallel to share and together deliver said total braking current to said dissipative resistors, and that said two control units are configured to communicate with each other so as to calculate and determine the proportion of said total braking current to be delivered to said at least one dissipative resistor of each braking device..

By the fact that said control units will receive said total braking current reference signal and control the two arrangements to operate in parallel to share and together deliver the total braking current each control unit may automatically supervise the other braking device. Thus, said first control unit will discover a possible failure of the second electric braking device and conversely. Furthermore, said control units may control the two arrangements to share said total braking current in accordance with the conditions prevailing. By the fact that said two control units are configured to communicate with each other so as to calculate and determine the proportion of said total braking current to be delivered to said at least one dissipative resistor of each braking device, said arrangements may share the braking current and by that the electric braking devices share the braking torque in a favourable way.

According to an embodiment of the invention each of said braking devices is configured to alone deliver said total braking current ordered to said at least one dissipative resistor thereof upon failure of the other braking device. Thus, in case of failure of one of the electric braking devices the other electric braking device will take over the whole brake power for the remaining part of the brake distance and ensure that the vehicle is still appropriately braked.

According to another embodiment of the invention each said braking device comprises a member configured to measure the current flowing through said at least one dissipative resistor of the device when braking and send information about the intensity of the current measured to the control unit of the device for checking the function of the device. Such a feedback loop enables reliable checking of the function of the electric braking device in question.

According to another embodiment of the invention being a further development of the embodiment last mentioned said member or control unit of each braking device is configured to send information about said intensity of the current measured to the control unit of the other braking device for supervising each braking device by the control unit of the other braking device. Reliable mutual supervision of the electric braking devices of the braking system may by this be obtained. Said information is then preferably used by the control units of the two braking devices by determining ΔI as I_{ref}/2 -I₁, (I₁ and I₂ being the intensities of the currents to the control units of the first and second braking devices, respectively) and if ΔI > 0 I₂ is increased by ΔI and correspondingly for I₁.

According to another embodiment of the invention said first electric braking device has current valves controlled through a converter control unit to conduct current to said at least one dissipative resistor thereof for electric braking of the vehicle when said machine and converter are connected to an electric power supply. This results in a suitable control of the braking current and by that braking torque of said first electric braking device.

According to another embodiment of the invention said second electric braking device comprises a current path from said electric terminals through rectifying diodes of said converter and means configured to vary the resistance of said path, said second control unit is separated from a converter control unit configured to control said converter by Pulse Width Modulation, operable independently of the existence of a supply of electric power to said converter and the converter control unit and configured to control said resistance means to keep said resistance infinitely high when not braking through said second device and to accomplish braking through said second device by varying this resistance to control the intensity of the current from the electric machine through said diodes of the converter through said connection and by that the braking torque applied to said wheels through the device, and said resistance varying means is controllable to vary the resistance of said connection down to a theoretical zero by enabling a bypassing of said at least one dissipative resistor by said current. The presence of such a second control unit and said means enables an electric safety operation resulting in a control braking also under emergency conditions, since said resistance of said path and by that the intensity of the current from the electric machine may be varied. This means that a control braking action may be obtained in emergency conditions without any need of a mechanical brake with large dimensions therefor. Furthermore, by the fact that said means are controllable to vary the resistance of the connection down to a theoretical zero the intensity of said current may be kept at a desired level also when the speed of the track-bound vehicle has decreased to a rather low level for ensuring considerable braking also at this speed and down to a very low speed, so that only a small mechanical brake is required for stopping the vehicle and holding the vehicle in a parking position. "Theo-retical zero" means that the resistance is neglectable with respect to the resistance of said at least one dissipative resistor, such as in any case less than 1 % thereof, but it may of course not be zero, since said connection will have a resistance, not at least caused by said diodes and possibly other semiconductor devices therein even if those are in a turned-on state.

According to another embodiment of the invention the electric braking system comprises an electric power source comprising at least one electric battery configured to provide said second control unit of said second electric braking device with electric power. This means that said second electric braking device may operate totally independently of disturbances of any electric power supply to the vehicle and/or any malfunction of any equipment, especially electric or electronic equipment of the vehicle.

According to another embodiment of the invention said second electric braking device comprises a member configured to measure the direct voltage of a direct voltage intermediate link of a said converter and send information thereabout to said second control unit, and said second control unit is configured to control said resistance varying means to vary said resistance to obtain a substantially constant intensity of said current and by that of a braking torque during braking of the vehicle through this second device. This means that a powerful substantially constant braking action may be obtained even if said first electric braking device would fail down to a very low speed of the vehicle, which may then also be reached in a short period of time. This may be compared with the case of a constant said resistance as of a certain speed, which would then result in a braking torque decreasing substantially with the speed.

According to another embodiment of the invention said second electric braking device comprises a member configured to measure the intensity of said current and send information thereabout to said second control unit, and the second control unit is configured to control said resistance varying means to vary said resistance to obtain a substantially constant intensity of said current and by that of a braking torque during the braking of the vehicle through said second device. This is another favourable option of realising efficient braking already through said second electric braking device alone.

According to another embodiment of the invention the electric braking system comprises a separate capacitor connected to each electric terminal of said electric machine by a switching member, and said second control unit is configured to control these switching members to be open as long as said converter and by that the electric machine is connected to an electric power source and these switching members to close when the electric power supply to the converter is interrupted and safety braking is to be carried out through said second electric braking device for increasing the braking torque obtained. Accordingly, such capacitors may be used to increasing the braking torque when carrying out braking through the electric braking system.

The invention also relates to a track-bound vehicle arrangement comprising an electric braking system according the present invention as well as a track-bound vehicle having an electric braking system according to the present invention. The advantages of such a driving arrangement and vehicle with respect to the reduction of cost, weight and negative influence upon the environment when carrying out braking appear clearly from the above disclosure of different embodiments of an electric braking system according the present invention.

A track-bound vehicle has according to an embodiment of the invention a separate said electric braking system for each wheel axle thereof. This will ensure efficient and reliable braking for a vehicle having all the wheel axles driven.

Further advantages as well as advantageous features of the invention will appear from the following description.

### BRIEF DESCRIPTION OF THE DRAWINGS

With reference to the appended drawings, below follows a specific description of an electric braking system according to an embodiment of the invention cited as an example.

In the drawings:
- Fig 1: is a very simplified circuit diagram illustrating an electric braking system according to an embodiment of the invention, and
- Fig 2: is a somewhat more detailed circuit diagram of an electric braking system of the type shown in Fig 1.

### DETAILED DESCRIPTION OF AN EMBODIMENT OF THE INVENTION

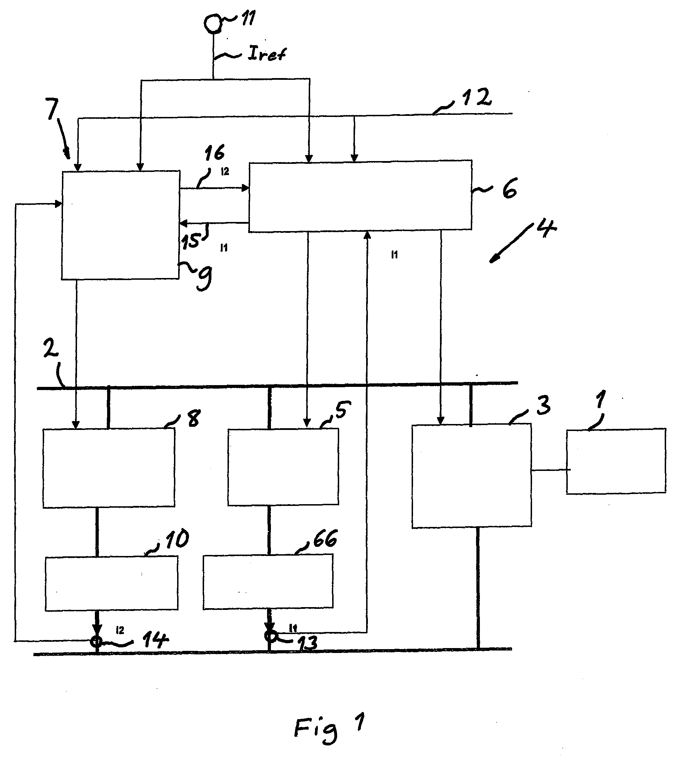

The general construction of an electric braking system for an electric track-bound vehicle according to an embodiment of the present invention is illustrated in Fig 1. The vehicle has an electric permanent magnet machine 1 configured to be connected to an electric power source 2 through a converter 3 configured to control the machine 1 by Pulse Width Modulation for propulsion of the vehicle by power transmission to wheels thereof.

The electric braking system comprises a first electric braking device 4 having a first current influencing arrangement 5 and first control unit 6 configured to control said first arrangement to conduct current I₁ from electric terminals of the electric machine 1 to at least one first dissipative resistor 66 for electric braking of the vehicle.

The electric braking system has also a second electric braking device 7 having a second current influencing arrangement 8 and a second control unit 9 configured to control said second arrangement to conduct current I₂ from electric terminals of the electric machine to at least one second dissipative resistor 10 for electric braking of the vehicle.

The system further comprises means 11 configured to provide both said control unit 6, 9 with a same reference signal I_{ref} of a total braking current to be led from electric terminals of the electric machine 1 to said dissipative resistors 66, 10 of the two devices. These means are preferably operated by the driver of the vehicle. Said control units do also receive a brake signal 12 reporting that it is time to brake the vehicle. The control units 6, 9 are configured, upon receipt of a said total braking current reference signal I_{ref}, to control said two arrangements 5, 8 in parallel to share and together deliver said total braking current to said dissipative resistors. Accordingly, the control units 6, 9 controls the arrangements 5, 8 to deliver currents I₁ and I₂ through the braking resistors 6 and 10, respectively, which together are I_{ref}. Each control unit starts to aiming at delivering I_{ref}/2 and does after a delay consider a deviation of the respective current I₁ or I₂ therefrom for obtaining this.

Each braking device comprises a member 13, 14 configured to measure the current flowing through said at least one dissipative resistor of the device when braking and send information about the intensity of the current measured to the control unit of the device for checking the function of the device. It is shown how the control unit of each braking device is configured to send information about said intensity of the current measured to the control unit of the other braking device (an alternative is to send said information directly from a current sensor to the other control unit) for supervising each braking device by the control unit of the other braking device, which is shown through the arrows 15, 16. The feedback loop from the members 13, 14 to the control units 6, 9 provides the respective control unit with an evidence of the good function of the electric braking device in question.

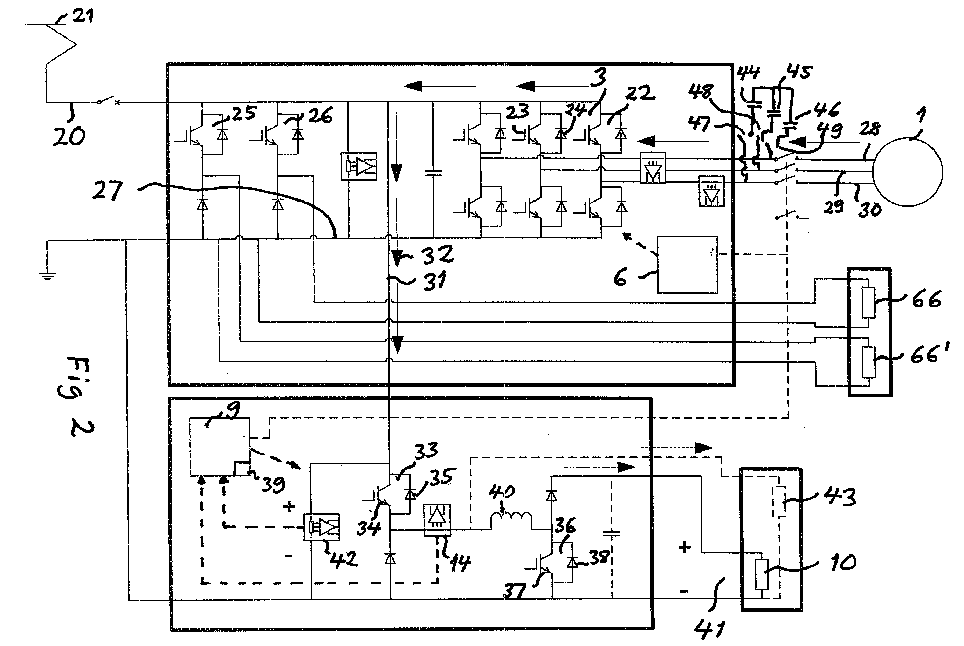

Fig 2 illustrates more detailed how an electric braking system according to the present invention with the general structure shown in Fig 1 may be realised. The electric braking system is applied to a track-bound vehicle 20 schematically indicated. It is shown how the vehicle has an electric permanent magnet machine 1 configured to be connected to an electric power source 21, here in the form of a DC-line, through a converter 3 having current valves 22 of at least one semiconductor device 23 of turn-off type, here an IGBT, connected in anti-parallel with a rectifying diode 24. The converter is configured to control the electric machine 1 by Pulse Width Modulation for propulsion of the vehicle by power transmission to wheels thereof. The current valves 22 of the converter 3 are controlled by a converter control unit 6. This converter control unit 6 is configured to also control further current valves 25, 26 connected to a direct voltage intermediate link 27 of the converter 3 for obtaining electric service braking of the vehicle. The current valves 25, 26 are for that sake connected to first dissipative brake resistors 66. When electric braking is to take place through said first electric braking device an electric current generated through the rotation of the machine 1 will flow from the terminals 28-30 thereof through the diodes 24 of the converter and either through the current valves 25, 26 to the dissipative resistors 66, 66' or into the DC-line 21 when this is possible, i.e. no other vehicle is close to the electric track-bound vehicle in question.

A second electric braking device of the electric braking system according to the invention will now be described, and this may as explained below also be used for braking when braking may not be carried out through the first electric braking device described above, which may for instance be the case when the electric power supply to the converter and/or the converter control unit is interrupted. The second electric braking device comprises a resistive braking torque production assembly comprising a path 31 of the electric terminals 28-30 of the electric machine 1 through the six rectifying diodes 24 of the converter 3 including at least one dissipative resistor 10. This braking device comprises means configured the vary the resistance of the path 31 and comprises a series connection, as seen in a path of said current (arrows 32) from said machine and said converter, of a first step-down switch 33 in the form of a current valve having a semiconductor device 34 of turn-off type, such as an IGBT, and a rectifying diode 35 connected in anti-parallel therewith and then a step-up switch 36 in the form of a current valve having a semiconductor device 37 of turn-off type, such as an IGBT, and a rectifying diode 38 connected in anti-parallel therewith. A control unit 9 operable independently of the existence of the supply of electric power to said converter 3 and the converter control unit 6 by being connected to an electric power source comprising at least one electric battery 39, is configured to provide electric energy to and control gate drive units not shown and configured to control the semiconductor devices 34, 37 of the step-down switch and the step-up switch for controlling the resistance in said path 31.

An inductor 40 is arranged between the step-down switch 33 and the step-up switch 36 for both reducing peak currents from the IGBT 34 of the switch 33 and to act as a current injector for stepping up the voltage 41 across the dissipative brake resistor 10.

The second electric braking device has also a member 42 configured to measure the direct voltage of the direct voltage intermediate link 27 and send information thereabout to the control unit 9 as well as a said member 14 configured to measure the intensity of the current (arrows 32) in the path 31 and send information thereabout to the control unit 9. The control unit 9 is preferably configured to control the switches 33 and 36 to vary the resistance of the connection 31 to obtain a substantially constant intensity of the current in said connection and by that of said braking torque during braking of the vehicle through this second electric braking device.

It is shown in Fig 2 how the second electric braking device, which thanks to the battery 39 accordingly may function as a braking device independently of the existence of supply of electric power to the converter 3 and the control unit 6, may comprise a further resistor 43 connected in parallel with a step-up switch 36 and to the path between the step-down and the step-up switch for reducing the required size of the inductor 40.

It is illustrated how the second electric braking device may comprise a separate capacitor 44-46 connected to each electric terminal 28-30 of the electric machine 1 by a switching member 47-49. These capacitors may be switched in when the IGBTs 23 are turned off so as to increase the braking torque.

The operation of a second electric braking device shown in Fig 2 will now be explained. This second electric braking device is operating in parallel with said first electric braking device so as to together deliver a total braking current ordered to said dissipative resistors 66, 66' and 10. When braking the electric energy will flow from the electric permanent magnet machine 1 into the DC-link 27 through the six rectifying diodes 24 of the converter 3 and according to the arrows 32 in the path 31 to the combination of the step-down and step-up switches 33, 36. The purpose of these switches is to maintain a high constant resistive braking torque applied onto the machine 1 independently of the speed of the machine, i.e. of the vehicle. This may be accomplished by controlling the resistance in said path 31 to gradually decrease for keeping the intensity of said current substantially constant and by that the braking torque substantially constant. When the semiconductor devices of the switches 33 and 36 are turned off said resistance will be infinitely high, and the control unit 9 will upon receipt of a braking order given by the driver of the vehicle together with the control unit 5 of the first braking device start a braking action by alternatively turning the IGBT of the step-down switch 33 on over an increasing part of the time for varying said resistance from infiniteness to be the same as the resistance of said at least one dissipative resistor 10, when the IGBT 34 is continuously turned on. The control unit 9 is further configured to start and turn the IGBT 37 of the step-up switch 36 on as of said instant at which the IGBT 34 is continuously turned on and to turn the IGBT 37 on over an increasing part of time for decreasing said resistance and conducting an increasing part of the current through the IGBT 37 while increasing the by-passing of the dissipative resistor 10 and by that reducing said resistance towards theoretical zero, when also the IGBT 37 is continuously turned on. The current from the direct voltage intermediate link 27 may by proper control of the IGBT:s 34 and 37 through the control unit 9 be controlled to have a constant intensity during the braking procedure until the number of revolutions of the electric machine 1 and by that the speed of the vehicle is very low, perhaps less than 5 km/hour or even less than 3 km/hour. A small mechanical brake may then be used to stop the vehicle and holding the vehicle in the parking position.

The first electric braking device and the second electric braking device in the electric braking system according to the present invention work in parallel and each control unit 5, 9 per electric braking device supervises the other electric braking device. In case of one electric braking device is failing the other electric braking device takes over the whole brake power for the remaining part of the brake distance.

Furthermore, it is pointed out that a said electric track-bound vehicle may have an electric braking system according to Fig 1 for each driven wheel axle of the vehicle, which means that such a vehicle may have as many as 16 such systems. A main control unit may then decide if the vehicle may still be driven would some of such electric systems fail.

The invention is of course not in any way restricted to the embodiment described above, but many possibilities to modifications thereof would be apparent to a person with ordinary skill in the art without departing from the scope of the invention as defined in the appended claims.

It is of course within the scope of the present invention to let the control units of the two electric braking devices to control the respective arrangement to obtain any proportion of that brake current to the brake current through the other device.

## Claims

1. An electric braking system for an electric track-bound vehicle comprising an electric permanent magnet machine (1) configured to be connected to an electric power source (21) through a converter (3) configured to control said machine by Pulse Width Modulation for propulsion of the vehicle by power transmission to wheels thereof, said system comprising
• a first electric braking device (4) having a first current influencing arrangement (5) and a first control (6) unit configured to control said first arrangement to conduct current from electric terminals (28-30) of the electric machine to at least one first dissipative resistor (66) for electric braking of the vehicle, and
• a second braking device, said second braking device being an electric braking device (7) having a second current influencing arrangement (8) and a second control unit (9) configured to control said second arrangement to conduct current from electric terminals of the electric machine to at least one second dissipative (10) resistor for electric braking of the vehicle, **characterized in that** the system further comprises means (11) configured to provide both said control units with a same reference signal (I_{ref}) of a total braking current to be led from electric terminals of the electric machine to said dissipative resistors of the two devices, that said control units (6, 9) are configured, upon receipt of a said total braking current reference signal, to control said two arrangements to operate in parallel to share and together deliver said total braking current to said dissipative resistors, and that said two control units (6,9) are configured to communicate with each other so as to calculate and determine the proportion of said total braking current to be delivered to said at least one dissipative resistor (66, 10) of each braking device.

2. An electric braking system according to claim 1, **characterized in that** each of said braking devices is configured to alone deliver said total braking current ordered to said at least one dissipative resistor (66, 10) thereof upon failure of the other braking device.

3. An electric braking system according to any of the preceding claims, **characterized in that** each said braking device comprises a member (13, 14) configured to measure the current flowing through said at least one dissipative resistor (66, 10) of the device when braking and send information about the intensity of the current measured to the control unit (6, 9) of the device for checking the function of the device.

4. An electric braking system according to claim 3, **characterized in that** said member (13, 14) or control unit (6, 9) of each braking device is configured to send information about said intensity of the current measured to the control unit of the other braking device for supervising each braking device by the control unit of the other braking device.

5. An electric braking system according to any of the preceding claims, **characterized in that** said first electric braking device (4) has current valves (22) controlled through a converter control unit (6) to conduct current to said at least one dissipative resistor (66) thereof for electric braking of the vehicle when said machine and converter are connected to an electric power supply.

6. An electric braking system according to any of the preceding claims, **characterized in that** said second electric braking device (7) comprises a current path from said electric terminals (28-30) through rectifying diodes (24) of said converter (3) and means (8) configured to vary the resistance of said path, that said second control unit (9) is separated from a converter control unit (6) configured to control said converter by Pulse Width Modulation, operable independently of the existence of a supply of electric power to said converter and the converter control unit and configured to control said resistance means (8) to keep said resistance infinitely high when not braking through said second device and to accomplish braking through said second device by varying this resistance to control the intensity of the current from the electric machine through said diodes (24) of the converter (3) through said connection and by that the braking torque applied to said wheels through the device, and that said resistance varying means (8) is controllable to vary the resistance of said connection down to a theoretical zero by enabling a by-passing of said at least one dissipative resistor (10) by said current.

7. An electric braking system according to claim 6 **characterized in that** it comprises an electric power source comprising at least one electric battery (39) configured to provide said second control unit (9) of said second electric braking device with electric power.

8. An electric braking system according to claim 6 or 7, **characterized in that** said second electric braking device (7) comprises a member (42) configured to measure the direct voltage of a direct voltage intermediate link (27) of a said converter (3) and send information thereabout to said second control unit (9), and that said second control unit is configured to control said resistance varying means (8) to vary said resistance to obtain a substantially constant intensity of said current and by that of a braking torque during braking of the vehicle through this second device.

9. An electric braking system according to any of claims 6-8, **characterized in that** said second electric braking device (7) comprises a member (14) configured to measure the intensity of said current and send information thereabout to said second control unit (9), and that the second control unit is configured to control said resistance varying means (8) to vary said resistance to obtain a substantially constant intensity of said current and by that of a braking torque during the braking of the vehicle through said second device.

10. An electric braking system according to any of claims 6-9, **characterized in that** it comprises a separate capacitor (44-46) connectable to each electric terminal (28-30) of said electric machine (1) by a switching member (47-49), and that said second control unit (9) is configured to control these switching members to be open as long as said converter (3) and by that the electric machine is connected to an electric power source (21) and these switching members to close when the electric power supply to the converter is interrupted and safety braking is to be carried out through said second electric braking device for increasing the braking torque obtained.

11. A track-bound vehicle driving arrangement, **characterized in that** it comprises an electric braking system according to any of claims 1-10.

12. A track-bound vehicle, **characterized in that** it has an electric braking system according to any of claims 1-10.

13. A vehicle according to claim 12, **characterized in that** it has a separate said electric braking system for each wheel axle thereof.

## Patentansprüche

1. Elektrisches Bremssystem für ein elektrisches, schienengebundenes Fahrzeug, das eine elektrische Permanentmagnet-Maschine (1) aufweist, die durch einen Wandler (3) mit einer Stromquelle (21) verbindbar ist, wobei der Wandler so gebaut ist, daß er die Maschine durch Pulsbreitenmodulation steuert, um dadurch das Fahrzeug durch Kraftübertragung auf seine Räder vorwärts zu treiben, wobei das System folgendes aufweist: eine erste elektrische Bremsvorrichtung (4), die mit einer ersten strombeeinflussenden Anordnung (5) und einer ersten Steuereinheit (6) versehen ist, die so gebaut ist, daß sie die erste Anordnung steuert, um Strom von den elektrischen Anschlüssen (28 - 30) der elektrischen Maschine zu wenigstens einem ersten Verlustwiderstand (66) zum elektrischen Bremsen des Fahrzeugs zu leiten, und ferner umfassend eine zweite Bremsvorrichtung, die eine elektrische Bremsvorrichtung (7) ist, welche eine zweite strombeeinflussende Anordnung (8) aufweist sowie eine zweite Steuereinheit (9), die dazu dient, die zweite Anordnung zu steuern, um Strom von den elektrischen Anschlüssen der elektrischen Maschine zu wenigstens einem zweiten Verlustwiderstand (10) zum elektrischen Bremsen des Fahrzeugs zu leiten, **dadurch gekennzeichnet, daß** das System des weiteren eine Einrichtung (11) aufweist, die dazu dient, beide genannten Steuereinheiten mit einem gleichen Referenzsignal (I_{ref}) eines gesamten Bremsstroms zu versehen, der von den elektrischen Anschlüssen der elektrischen Maschine zu den Verlustwiderständen der beiden Vorrichtungen geleitet wird, wobei die Steuereinheiten (6, 9) so gebaut sind, daß nach Empfang des Referenzsignals des gesamten Bremsstroms die beiden Anordnungen so gesteuert werden, daß sie parallel arbeiten und zusammen den gesamten Bremsstrom an die Verlustwiderstände abgeben, und daß die beiden Steuereinheiten (6, 9) so gebaut sind, daß sie miteinander kommunizieren, um dadurch das Verhältnis des gesamten Bremsstrom, der an wenigstens einen Verlustwiderstand (66, 10) jeder Bremsvorrichtung abgegeben wird, zu berechnen und zu bestimmen.

2. Elektrisches Bremssystem nach Anspruch 1, **dadurch gekennzeichnet, daß** jede der genannten Bremsvorrichtungen so gebaut ist, daß sie allein den gesamten Bremsstrom liefert, der für wenigstens einen von ihrem Verlustwiderstand (66, 10) verlangt wird, wenn die andere Bremsvorrichtung versagt.

3. Elektrisches Bremssystem nach einem der vorhergehenden Ansprüche, **dadurch gekennzeichnet, daß** jede Bremsvorrichtung einen Körper (13, 14) aufweist, der in der Lage ist, den Strom, welcher durch den wenigstens einen Verlustwiderstand (66, 10) der Vorrichtung beim Bremsen fließt, zu messen und Informationen über die Intensität des gemessenen Stroms an die Steuereinheit (6, 9) der Vorrichtung zu senden, um die Funktion der Vorrichtung zu überprüfen.

4. Elektrisches Bremssystem nach Anspruch 3, **dadurch gekennzeichnet, daß** der Körper (13, 14) oder die Steuereinheit (6, 9) jeder Bremsvorrichtung in der Lage ist, Informationen über die Intensität des gemessenen Stroms an die Steuereinheit der anderen Bremsvorrichtung zu senden, um dadurch jede Bremsvorrichtung durch die Steuereinheit der anderen Bremsvorrichtung zu überwachen.

5. Elektrisches Bremssystem nach einem der vorhergehenden Ansprüche, **dadurch gekennzeichnet, daß** die erste elektrische Bremsvorrichtung (4) Stromventile (22) aufweist, die durch eine Wandlersteuereinheit (6) gesteuert werden, um an wenigstens einen Verlustwiderstand (66) zur elektrischen Bremsung des Fahrzeugs Strom abzugeben, wenn die besagte Maschine und der Wandler an eine elektrische Spannungsquelle angeschlossen sind.

6. Elektrisches Bremssystem nach einem der vorhergehenden Ansprüche, **dadurch gekennzeichnet, daß** die zweite elektrische Bremsvorrichtung (7) von den elektrischen Anschlüssen (28 - 30), über Gleichrichterdioden (24) des Wandlers (3) und einer Vorrichtung (8), die so gebaut ist, daß der Widerstand des Strompfades variiert werden kann, einen Strompfad aufweist, daß des weiteren die zweite Steuereinheit (9) von einer Wandlersteuereinheit (6) getrennt ist, die dazu dient, den Wandler durch Impulsweiten-Modulation zu steuern und unabhängig von dem Vorhandensein einer elektrischen Stromzufuhr zu dem Wandler und der Wandlersteuereinheit arbeiten zu lassen, und die des weiteren dazu dient, die Widerstands-Vorrichtung (8) zu steuern, um den Widerstand unbegrenzt hoch zu halten, wenn nicht gebremst wird, und zwar durch die zweite Vorrichtung, die auch dazu dient, das Bremsen durch die zweite Vorrichtung dadurch zu bewerkstelligen, daß der Widerstand der Steuerung der Intensität des Stroms von der elektrischen Maschine durch die Dioden (24) des Wandlers (3) gesteuert wird, und zwar durch den genannten Anschluß und dadurch die auf die Räder durch die Vorrichtung einwirkende Bremskraft, und daß die den Widerstand variierende Vorrichtung (8) so steuerbar ist, daß der Widerstand des Anschlusses auf theoretisch Null reduziert wird, indem ein Bypass des wenigstens einen Verlustwiderstandes (10) durch den Strom ermöglicht wird.

7. Elektrisches Bremssystem nach Anspruch 6, **dadurch gekennzeichnet, daß** es eine elektrische Stromquelle aufweist, die mit wenigstens einer elektrischen Batterie (39) ausgestattet und so gebaut ist, daß die zweite Steuereinheit (9) der zweiten elektrischen Bremsvorrichtung für elektrischen Strom gebildet wird.

8. Elektrisches Bremssystem nach Anspruch 6 oder 7, **dadurch gekennzeichnet, daß** die zweite elektrische Bremsvorrichtung (7) einen Körper (42) aufweist, der dazu dient, die direkte Spannung eines Direktspannungs-Zwischenglieds (27) des Wandlers (3) zu messen und die Information darüber an die zweite Steuereinheit (9) zu senden, und daß diese zweite Steuereinheit die den Widerstand variierende Vorrichtung (8) steuern kann, um zum Erhalt einer im wesentlichen konstanten Intensität des Stroms den Widerstand zu variieren und damit eine Bremskraft während des Bremsens des Fahrzeugs durch diese zweite Vorrichtung.

9. Elektrisches Bremssystem nach einem der Ansprüche 6 bis 8, **dadurch gekennzeichnet, daß** die zweite elektrische Bremsvorrichtung (7) einen Körper (14) aufweist, um die Intensität des Stroms zu messen und die Information darüber an die zweite Steuereinheit (9) zu senden, und daß die zweite Steuereinheit die Widerstandänderungs-Vorrichtung (8) steuern kann, um den Widerstand zum Erhalt einer im wesentlichen konstanten Intensität des Strom zu variieren und dann während des Bremsens des Fahrzeugs durch die zweite Vorrichtung die Bremskraft.

10. Elektrisches Bremssystem nach einem der Ansprüche 6 bis 9, **dadurch gekennzeichnet, daß** es einen separaten Kondensator (44 - 46) aufweist, der mit jedem elektrischen Anschluß (28 - 30) der elektrischen Maschine (1) durch einen Schaltungskörper (47 - 49) verbindbar ist, und daß die zweite Steuereinheit (9) in der Lage ist, diese Schaltungskörper so zu steuern, daß sie offen sind, solange der Wandler (3) und dadurch die elektrische Maschine an eine elektrische Stromquelle (21) angeschlossen sind, und diese Schaltungskörper auch so zu steuern, daß sie schließen, wenn die elektrische Stromquelle für den Wandler unterbrochen wird und eine Sicherheitsbremsung durch die zweite elektrische Bremsvorrichtung auszuführen ist, um die erhaltene Bremskraft zu vergrößern.

11. Schienengebundenes Fahrzeugantriebs-Anordnung, **dadurch gekennzeichnet, daß** sie ein elektrisches Bremssystem gemäß einem der Ansprüche 1 bis 10 aufweist.

12. Schienengebundenes Fahrzeug, **dadurch gekennzeichnet, daß** es ein elektrisches Bremssystem nach einem der Ansprüche 1 bis 10 aufweist.

13. Fahrzeug nach Anspruch 12, **dadurch gekennzeichnet, daß** es für jede Fahrzeugachse ein separates elektrisches Bremssystem aufweist.

## Revendications

1. Système de freinage électrique d'un véhicule électrique sur rail, comprenant une machine (1) électrique à aimant permanent configurée pour être connectée à une source (21) de courant électrique par l'intermédiaire d'un convertisseur (3) configuré pour commander la machine par modulation d'impulsion en largeur pour propulser le véhicule par transmission de puissance à ses roues, le système comprenant
• un premier dispositif (4) de freinage électrique, ayant un premier agencement (5) influençant le courant et une première unité (6) de commande, configurée pour commander le premier agencement afin de conduire du courant de bornes (28 à 30) électriques de la machine électrique à au moins une première résistance (66) de dissipation afin de freiner électriquement le véhicule et
• un deuxième dispositif de freinage, le deuxième dispositif de freinage étant un dispositif (7) de freinage électrique, ayant un deuxième agencement (8) influençant le courant et une deuxième unité (9) de commande configurée pour commander le deuxième agencement afin de conduire du courant de bornes électriques de la machine électrique à au moins une deuxième résistance (10) de dissipation afin de freiner électriquement le véhicule,**caractérisé en ce que** le système comprend en outre des moyens (11) configurés pour fournir aux deux unités de commande un même signal (I_{ref}) de référence d'un courant total de freinage à envoyer des bornes électriques de la machine électrique aux résistances de dissipation des deux dispositifs, **en ce que** les unités (6, 9) de commande sont configurées pour, après réception d'undit signal de référence de courant total de freinage, commander les deux agencements pour qu'ils fonctionnent en parallèle afin de partager et de fournir ensemble le courant total de freinage aux résistances de dissipation et **en ce que** les deux unités (6, 9) de commande sont configurées pour communiquer l'une avec l'autre de manière à calculer et à déterminer la proportion du courant total de freinage à fournir à la au moins une résistance (66, 10) de dissipation de chaque dispositif de freinage.

2. Système de freinage électrique suivant la revendication 1, **caractérisé en ce que** chacun des dispositifs de freinage est configuré pour délivrer à soi seul le courant total de freinage à sa au moins une résistance (66, 10) après défaillance de l'autre disposition de freinage.

3. Système de freinage électrique suivant l'une quelconque des revendications précédentes, **caractérisé en ce que** chaque dispositif de freinage comprend un élément (13, 14) configuré pour mesurer le courant passant dans la au moins une résistance de dissipation du dispositif lors du freinage et pour envoyer de l'information sur l'intensité du courant mesurée à l'unité (6, 9) de commande du dispositif afin de contrôler le fonctionnement du dispositif.

4. Système de freinage électrique suivant la revendication 3, **caractérisé en ce que** l'élément (13, 14), ou l'unité (6, 9) de commande de chaque dispositif de freinage est configuré pour envoyé de l'information sur l'intensité du courant mesurée à l'unité de commande de l'autre dispositif de freinage afin de superviser chaque dispositif de freinage par l'unité de commande de l'autre dispositif de freinage.

5. Système de freinage électrique suivant l'une quelconque des revendications précédentes, **caractérisé en ce que** le premier dispositif (4) de freinage électrique a des soupapes (22) de courant commandées par une unité (6) de commande du convertisseur pour conduire du courant à sa au moins une résistance (66) de dissipation afin de freiner électriquement le véhicule lorsque la machine et le convertisseur sont connectés à une source de courant électrique.

6. Système de freinage électrique suivant l'une quelconque des revendications précédentes, **caractérisé en ce que** le deuxième dispositif (7) de freinage électrique comprend un trajet de courant partant des bornes (28 à 30) électriques et passant dans des diodes (24) redresseuses du convertisseur (3) et des moyens (8) configurés pour faire varier la résistance du trajet, **en ce que** la deuxième unité (9) de commande est séparée d'une unité (6) de commande du convertisseur configurée pour commander le convertisseur par modulation d'impulsion en largeur, pouvant fonctionner indépendamment de l'existence d'une alimentation en courant électrique du convertisseur et de l'unité de commande du convertisseur et configurée pour commander les moyens (8) de résistance pour maintenir la résistance infiniment grande lorsqu'il n'ya pas de freinage par le deuxième dispositif, et pour effectuer le freinage par le deuxième dispositif en faisant varier cette résistance pour commander l'intensité du courant à partir de la machine électrique dans les diodes (24) du convertisseur (3) par l'intermédiaire de la connexion et par cela le couple de freinage appliqué au groupe par l'intermédiaire du dispositif, et **en ce que** les moyens (8) pour faire varier la résistance peuvent être commandés pour abaisser la résistance de la connexion à un zéro théorique en permettant de court-circuiter la au moins une résistance (10) de dissipation.

7. Système de freinage électrique suivant la revendication 6, **caractérisé en ce qu'**il comprend une source de courant électrique comprenant au moins une batterie (39) électrique configurée pour alimenter la deuxième unité (9) de commande du deuxième dispositif de freinage électrique en courant électrique.

8. Système de freinage électrique suivant les revendications 6 ou 7, **caractérisé en ce que** le deuxième dispositif (7) de freinage électrique comprend un élément (42) configuré pour mesurer la tension continue d'une liaison (27) intermédiaire en tension continue du convertisseur (3) et envoyer de l'information à ce sujet à la deuxième unité (9) de commande, et **en ce que** la deuxième unité de commande est configurée pour commander les moyens (8) pour faire varier la résistance afin de faire varier la résistance pour obtenir une intensité sensible constante du courant et, par cela, d'un couple de freinage pendant le freinage du véhicule par 1"intermédiaire du deuxième dispositif.

9. Système de freinage électrique suivant l'une quelconque des revendications 6 à 8, **caractérisé en ce que** le deuxième dispositif (7) de freinage électrique comprend un élément (14) configuré pour mesurer l'intensité du courant et envoyer 1"information à ce sujet à la deuxième unité (9) de commande et **en ce que** la deuxième unité de commande est configurée pour commander les moyens (8) faisant varier la résistance pour faire varier la résistance afin d'obtenir une intensité sensiblement constante du courant et, par cela, d'un couple de freinage pendant le freinage du véhicule par l'intermédiaire du deuxième dispositif.

10. Système de freinage électrique suivant l'une quelconque des revendications 6 à 9, **caractérisé en ce qu'**il comprend un condensateur (44 à 46) distinct pouvant être connecté à chaque borne (28 à 30) électrique de la machine (1) électrique par un élément (47 à 49) de commutation et **en ce que** la deuxième unité (9) de commande est configurée pour commander ces moyens de commutation afin qu'ils soient ouverts tant que le convertisseur (3), et par cela la machine électrique, est connecté à une source (21) de courant électrique et ces éléments de commutation afin qu'ils se ferment lorsque la source de courant électrique du convertisseur est interrompue et lorsqu'un freinage de sécurité doit être effectué par le deuxième dispositif de freinage électrique pour augmenter le couple de freinage obtenu.

11. Agencement de traction d'un véhicule lié à la voie, **caractérisé en ce qu'**il comprend un système de freinage électrique suivant l'une quelconque des revendications 1 à 10.

12. Véhicule sur rail, **caractérisé en ce qu'**il a un système de freinage électrique sur l'une quelconque des revendications 1 à 10.

13. Véhicule suivant la revendication 12, **caractérisé en ce qu'**il a un système de freinage électrique distinct pour chaque essieu de roue.
